# EUROPEAN PATENT APPLICATION

(11) **EP 1 499 044 A2**
(43) Date of publication of application: **19.01.2005**
(21) Application number: 04254221.7
(22) Date of filing: 14.07.2004
(51) Int. Cl.: H04B 10/158

(54) **Optical receiving method, optical receiver, and optical transmission system using the same**

(30) Priority: 14.07.2003 JP 2003273818
(71) Applicant: NEC CORPORATION, Tokyo (JP)
(72) Inventor: Kurebayashi, Rintaro, Minato-ku Tokyo (JP)
(74) Representative: Moir, Michael Christopher

(57) **Abstract**

To improve reception sensitivity by compressing a signal light pulse by performing phase modulation and wavelength-dispersion compensation at the time of high-density wavelength-division multiplexing. There are provided an optical phase modulator and a wavelength-dispersion module, for performing signal processing on an optical signal propagating from the transmission side through an optical fiber transmission path and being received on the receiving side; communication information is thereby obtained. By the optical phase modulator, a frequency chirp corresponding to a phase-modulating signal is applied to the optical signal received on the receiving side. The wavelength-dispersion module applies wavelength dispersion to the optical signal which is frequency-chirped by the phase modulator, the optical signal thereby being pulse-compressed.

## Description

### BACKGROUND OF THE INVENTION

### 1. Field of the Invention

The present invention relates to optical receivers for improving reception sensitivity in wavelength-division multiplexing communications.

### 2. Related Art

As a method for compressing an optical pulse on a time base, a chirping compression method is known in which an optical pulse is phase-modulated so as to be chirped (given a linear spectrum diffusion), and then compressed by being transmitted through dispersed circuits with different propagation times that are dependent on frequencies. When an optical pulse is compressed, the peak power increases since the duty ratio of the signal decreases; the reception sensitivity is thereby improved. This is known from the fact that return-to-zero (RTZ) signals have higher reception sensitivity than non-return-to-zero (NRZ) signals. Thus, on the transmission side, a signal light pulse is compressed by combining phase modulation and wavelength dispersion, the reception sensitivity thereby being improved.

For example, Electronics Letters, Vol. 32, No. 1, pp.52-54 (1995) discloses that optical fiber transmission characteristics' can be improved by performing phase modulation in an optical transmitter in wavelength division multiplexing communications. The method of applying phase modulation on the transmission side is effective in suppressing deterioration in transmission characteristics due to the non-linearity and wavelength dispersion caused when a signal light is transmitted through the optical fiber. Therefore, it is widely used in the long distance optical transmission system. Further, Journal of Lightwave Technology, Vol.12, No.10, October 1994 reports an effect of compensating wavelength dispersion in a transmission path by phase modulation.

However, the conventional art has the following problem.

The method of applying phase modulation on the transmission side is not suitable for densification of wavelength division multiplexing. The reasons are as follows. That is, when phase modulation is applied, the frequency band of the signal light expands, whereby optical frequency components overlap with that of adjacent channels when high-density wavelength division multiplexing is performed. Consequently, marked deterioration in the reception sensitivity due to crosstalk appears. Thus, in the transmission method where, for example, 10Gb/s signals are wavelength-division multiplexed with 25GHz spacing, it is quite difficult to apply phase modulation on the transmission side.

### SUMMARY OF THE INVENTION

It is therefore an object of the preferred embodiments of the present invention to provide optical receivers in which signal light pulses are compressed by applying phase modulation and wavelength-dispersion compensation when high-density wavelength-division multiplexing is performed, and to improve reception sensitivity.

An optical receiver according to the present invention comprises: a phase modulating means for applying a frequency chirp, corresponding to a phase modulating signal, to an optical signal propagating through an optical fiber transmission path; a dispersion applying means for applying wavelength dispersion to the optical signal which is frequency chirped by the phase modulating means, to thereby pulse-compress the optical signal; and a photoelectric conversion means for converting the optical signal, which is pulse-compressed by the dispersion applying means, into an electric signal.

An optical signal propagating through the optical fiber transmission path is first applied with a frequency chirp corresponding to an optical modulating signal by the phase modulating means. Then, the optical signal, which is frequency chirped, is applied with wavelength dispersion by the dispersion applying means to thereby being pulse-compressed. The pulse-compressed optical signal is converted into an electric signal by the photoelectric conversion means. In this way, by pulse-compressing the optical signal on the receiving side and then converting it into an electric signal, optical signal will never overlap with each other even in wavelength division multiplexing communications, whereby the receiving sensitivity is improved.

The phase modulating means may apply a frequency chirp to the optical signal in such a manner that a phase delays in the first half of a bit-slot of the optical signal and the phase progresses in the second half. Further, the phase modulating means may include a polarization controller which causes the optical signal, input into the optical phase modulator, to be in the linearly polarized state.

Further, the photoelectric conversion means may output to the phase modulating means a clock signal included in the electric signal as a phase modulating signal. In this case, the clock signal included in the electric signal is output to the phase modulating means as a phase modulating signal. Therefore, there is no need to provide a clock signal generating circuit or the like additionally. Here, the photoelectric conversion means may include a phase shifter for adjusting the phase of the clock signal and an amplifier for adjusting the amplitude of the clock signal.

Further, the photoelectric conversion means may include an photoelectric converter for converting an optical signal which is pulse-compressed by the dispersion applying means into an electric signal, or may include a one bit delay Mach-Zehnder interferometer and a balanced optical receiver, instead of the photoelectric converter.

Further, in between the dispersion applying means and the photoelectric conversion means, there may be provided an optical amplifier for amplifying an optical signal which is pulse-compressed by the dispersion applying means, and a filter for removing noises from the optical signal amplified by the optical amplifier and outputting them to the photoelectric conversion means.

An optical transmission system according to the present invention is a system in which a transmission unit, which multiplexes a plurality of optical signals having different wavelengths, and a receiving unit, which separates the multiplexed optical signal by each wavelength, are connected with each other via an optical fiber transmission path. On the receiving side, there are provided a plurality of optical receivers according to the present invention for obtaining each of the electric signals based on an optical signal separated by each wavelength. In more detail, the optical transmission system is a system in which the transmission side and the receiving side are connected with each other via an optical fiber transmission path. On the transmission side, there are provided: a plurality of light sources which emit lights having different wavelengths; a plurality of data modulators which data-modulate the lights emitted from the light sources, respectively, and output them as optical signals; and a wavelength division multiplexer which multiplexes the plurality of optical signals having different wavelengths output from the data modulators, and outputs an multiplexed optical signal to the optical fiber transmission path. On the other hand, on the receiving side, there are provided: a wavelength separator for separating the multiplexed optical signal propagating the optical fiber transmission path by each wavelength; and a plurality of optical receivers according to the present invention for obtaining each of the electric signals based on each optical signal separated by the wavelength separator. Here, the optical signal may consist of an NRZ signal.

An optical receiving method according to the present invention comprises: applying a frequency chirp, corresponding to a phase modulating signal, to an optical signal propagating through an optical fiber transmission path; applying wavelength dispersion to the optical signal which is frequency chirped, to thereby pulse-compress the optical signal; and converting the pulse-compressed optical signal into an electric signal. In the optical receiving method, the optical signal may be applied a frequency chirp in such a manner that the phase delays in the first half of a bit-slot of the optical signal which is a digital signal and the phase progresses in the second half. Further, a clock signal included in an electric signal may be used as a phase modulating signal.

In other words, the optical receiver and the optical transmission system according to the present invention have such a structure that, in a high-density wavelength division multiplexing optical fiber transmission system, an optical signal propagating through an optical fiber is applied with phase modulation and wavelength dispersion, so that the optical signal waveform is shaped, whereby the receiving sensitivity is improved. That is, an optical signal propagating through the optical fiber transmission path is frequency chirped by an optical phase modulator and then is applied with predetermined wavelength dispersion by a wavelength dispersion module whereby being pulse-compressed. This optical signal is converted into an electric signal by a photoelectric converter, then reproduced as a data signal and a clock signal via a clock/data reproducing circuit, and received. Here, a part of the reproduced clock signal is fed back as a phase modulating signal to the optical phase converter via a phase shifter and an amplifier, whereby a frequency chirp synchronized with the optical signal is applied.

### Effects

According to the optical receiver and the like of the present invention, receiving sensitivity can be improved by pulse-compressing an optical signal on the receiving side and then converting it into an electric signal, without causing overlaps between optical signals even in the wavelength division multiplexing communications. In other words, the following effects can be achieved according to the present invention.

A first effect is that even in a high-density wavelength division multiplexing transmission, a waveform compression effect can be obtained by combining phase modulation and wavelength dispersion while keeping an interference with an adjacent channel small. This is because a wavelength division multiplexed signal is phase-modulated after it is separated by a wavelength on the receiving side, whereby the optical waveform can be compressed without being affected by the adjacent channels.

A second effect is that by applying an NRZ modulation method on the transmission side and using an optical receiver according to the present invention on the receiving side, both of the proof stress against dispersion held by the NRZ modulation method and high receiving sensitivity held by the RZ modulation method or the CS-RZ modulation method can be realized. This is because by using the NRZ modulation method, an influence of waveform distortion on the dispersion changes in the optical fiber transmission path becomes small, and also the receiving sensitivity is improved due to the pulse compression effect of the NRZ signal of the optical receiver according to the present invention.

A third effect is that a transmittable distance is enlarged. This is because receiving can be realized with a low signal light-to-noise light ratio due to the reduced error occurrence rate.

A fourth effect is that an additional clock generating circuit is not required, since a clock signal generated from a clock/data reproducing circuit is used for optical waveform shaping.

### BRIEF DESCRIPTION OF THE DRAWINGS

Preferred features of the present invention will now be described, by way of example only, with reference to the accompanying drawings, in which:-
Figs. 1A and 1B are block diagrams showing a first embodiment of an optical receiver according to the present invention;
Fig. 2 is a block diagram showing an embodiment of an optical transmission system using the optical receiver according to the present invention;
Fig. 3 is a waveform chart showing the operation of the optical receiver according to the present invention;
Figs. 4A and 4B are waveform charts showing the operation of the optical receiver according to the present invention;
Figs. 5A and 5B are waveform charts showing the operation of the optical transmission system shown in Fig. 2;
Fig. 6 is a waveform chart showing eye patterns in the optical transmission system shown in Fig. 2; and
Fig. 7 is a block diagram showing a second embodiment of the optical receiver according to the present invention.

### PREFERRED EMBODIMENTS OF THE INVENTION

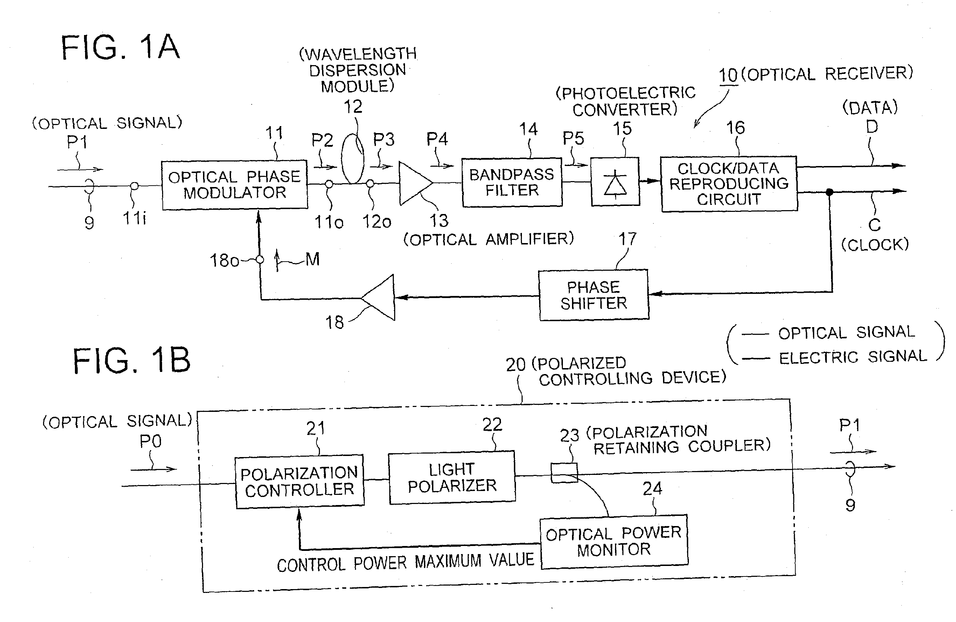

As shown in Fig. 1A, the present invention performs phase modulation and wave dispersion on an optical signal propagating from the transmission side through an optical fiber and received on the receiving side to thereby shape waveforms of the optical signal, so as to improve the receiving sensitivity, in an optical fiber transmission system which is high-density wavelength-division multiplexed. In other words, an optical signal propagating from the transmission side through an optical fiber and received on the receiving side is frequency-chirped by an optical phase modulator. Then, to the frequency-chirped optical signal, wavelength dispersion is applied by a wavelength dispersion module, so that the optical signal is pulse-compressed. Then, the pulse-compressed optical signal is converted into an electric signal, and from the electric signal, communication information is obtained. On the other hand, a clock obtained at the time of obtaining the communication information from the electric signal is fed back to the optical phase modulator, whereby the frequency chirp synchronized with the optical signal is applied.

Now, the present invention will be described more specifically. As shown in Fig. 1A, an optical receiver 10 according to the present invention, which receives on the receiving side an optical signal propagating from an optical transmitter not shown through an optical transmission path, includes an optical phase modulator 11, a wavelength dispersion module 12, a photoelectric converter 15, and a clock/data reproducing circuit 16.

The optical phase modulator 11 applies a frequency chirp, corresponding to a phase modulation signal M, to an optical signal P1 propagating from an optical transmitter not shown through an optical fiber transmission path and received on the receiving side. The wavelength dispersion module 12 applies wavelength dispersion to an optical signal P2 which is frequency-chirped by the optical phase modulator 11, to thereby pulse-compress the optical signal P2. The photoelectric converter 15 converts an optical signal P5, pulse-compressed by the wavelength dispersion module 12, into an electric signal. The clock/data reproducing circuit 16 separates data (communication information) D and a clock C from the electric signal output from the photoelectric converter 15 and reproduces them.

The optical receiver 10 also includes a light amplifier 13, a bandpass filter 14, a phase shifter 17, an amplifier 18, and a polarization controlling device 20.

The light amplifier 13 amplifies an optical signal P3 which is pulse-compressed by the wavelength dispersion module 12, and inputs the amplified optical signal P3 into the bandpass filter 14. The bandpass filter 14 removes noise components from an optical signal P4 amplified by the light amplifier 13, and outputs an optical signal P5, which does not include noises, to the photoelectric converter 15. The phase shifter 17, using the clock C output from the clock/data reproducing circuit 16 as an input signal, adjusts the phase of the clock C. The amplifier 18 amplifies the clock C which is phase-adjusted by the phase shifter 17, and outputs it, as a phase modulation signal M, to the optical phase modulator 11. Further, as shown in Fig. 1B, the polarization controlling device 20 is provided in the previous step to the optical phase modulator 11. The polarization controlling device 20 linearly-polarizes an optical signal P0, and outputs a linearly-polarized optical signal P1 to the optical phase modulator 11.

Although the polarization controlling device 20 shown in Fig. 1B is provided in the previous step to the optical phase modulator 11, the polarization controlling device 20 is not necessarily provided. The reason is as follows. That is, an optical phase modulator with such a structure that the polarization dependency is quite small has been developed, and by using an optical phase modulator having such a characteristic as the optical phase modulator 11 in Fig. 1A, the polarization controlling device 20 is not required.

Next, the operation of the optical receiver 10 will be described.

An optical transmitter, not shown, outputs communication information in the form of an optical signal to the optical fiber transmission path 9. The optical signal propagating the optical fiber transmission path 9 is received by the optical receiver 10 of the present invention shown in Fig. 1A. The optical signal P0, received by the optical receiver 10, is first linearly polarized by the polarization controlling device 20 shown in Fig. 1B, and the linearly polarized optical signal P1 is input into the optical phase modulator 11. The optical phase modulator 11 applies a frequency-chirp, corresponding to the phase modulation signal M, to the input optical signal P1. Here, the optical phase modulator 11 applies a frequency-chirp to the optical signal P1 in such a manner that the phase delays in the first half of the bit-slot of the optical signal P1 and the phase progresses in the second half.

The wavelength dispersion module' 12 performs wavelength dispersion processing to the frequency-chirped optical signal P2, and pulse-compresses the resultant optical signal P3. The optical amplifier 13 amplifies the pulse-compressed optical signal P3 and outputs it. When the optical signal P4, amplified by the optical amplifier 13, is input, the bandpass filter 14 removes noise components from the optical signal P4, and outputs the optical signal P5 having no noise components. The optical signal P5 is converted into an electric signal by the photoelectric converter 15.

When the electric signal is input, the clock/data reproducing circuit 16 separates the data (communication information) D and the clock C from the electric signal and reproduces them.

When the clock C output from the clock/data reproducing circuit 16 is input, the phase shifter 17 adjusts the phase of the clock C. The clock C, phase-adjusted by the phase shifter 17, is amplified by the optical amplifier 18 and is fed back to the optical phase modulator 11 as the phase modulation signal M.

In this way, an optical signal, received on the receiving side, is pulse-compressed and then converted into an electric signal, whereby it is possible to prevent optical signals from overlapping with each other when performing wavelength-division multiplexing communications. Thereby, the receiving sensitivity can be improved.

Next, the specific structure of the optical receiver 10 will be explained.

The optical signal P1, which is output from an optical transmitter not shown and propagates through the fiber transmission path 9 and is received on the receiving side, is an optical digital signal such as an RZ modulating signal or an NRZ modulating signal. Thus, the optical phase modulator 11 applies a frequency-chirp to the received optical signal such as an RZ modulating signal or an NRZ modulating signal. As the optical phase modulator 11, one having the structure utilizing an electro-optical effect consisting of lithium niobate (LiNbO₃), is used. The optical modulator 11 applies to the optical signal P1 the phase modulating signal M (voltage applied to the clock) having the same frequency as the bit rate of the optical signal P1, to thereby apply a frequency chirp synchronized with the light of each bit-slot.

The optical signal P0 as a media having the electro-optical effect typically has a large polarization dependency. Thus, the polarization controlling device 20 shown in Fig. 1B is provided in the previous step to the optical phase modulator 11. The polarization controlling device 20 linearly-polarizes the optical signal P0 propagating through the optical fiber transmission path 9, and inputs the linearly-polarized optical signal P1 into an input point 11i of the optical phase modulator 11.

As shown in Fig. 1B, the polarization controller device 20 includes a polarization controller 21, a light polarizer 22, a polarization retaining coupler 23, and an optical power monitor 24. The polarization controller 21 consists of, for example, an actuator pressing from the triaxial directions the optical fiber (optical fiber transmission path 9) built in the optical receiver 10. The polarization controller 21 adjusts the pressing power against the optical fiber corresponding to driving signals to thereby perform polarization control to the optical signal P0 propagating through the optical fiber. The light polarizer 22 sets the optical axis of the optical signal P0 which is polarization-controlled by the polarization controller 21 so as to align with the main axis of the birefringence of the electric-field optical crystal. The optical power monitor 24 consists of a typical photoelectric converting element.

Although the polarization controlling device 20 is provided in the previous step to the optical phase modulator 11, the polarization controlling device 20 is not necessarily provided. The reason is as follows. That is, an optical phase modulator with such a structure that the polarization dependency is quite small has been developed, and by using an optical phase modulator having such a characteristic as the optical phase modulator 11 in Fig. 1A, the polarization controlling device 20 is not required.

The wavelength dispersion module 12, connected to the output side of the optical phase modulator 11, serves to offset the frequency chirp applied by the optical phase modulator 11. The optical signal P2 output from the optical phase modulator 11 is pulse-compressed by the wavelength dispersion module 12. As the wavelength dispersion module 21, one which applies an appropriate wavelength dispersion such as a wavelength dispersion compensation module using fiber grating can be selected freely, instead of an optical fiber.

The optical amplifier 13, connected to the output side of the wavelength dispersion module 12 amplifies the optical power of the optical signal received by the optical receiver 10 to optical power suitable for the optical receiver 10.

The bandpass filter 14 removes the noise components of the spontaneous emission light generated in the course of amplification by the optical amplifier 13.

Note that if the optical signal has signal optical power enough for receiving and does not include light noise components, there is no need to provide the optical amplifier 13 and the bandpass filter 14.

The optical signal passing through the optical amplifier 13 and the bandpass filter 14 is converted into an electric signal by the photoelectric converter 15. As the photoelectric converter 15, a module incorporating PIN-PD (p-intrinsic-n photo diode) or incorporating PIN-PD and an amplifier may be used.

The electric signal converted by the photoelectric converter 15 is separated into the data D and the clock C and reproduced by the clock/data reproducing circuit 16. The clock/data reproducing circuit 16 includes a data identification circuit and a data D/clock retrieval circuit. The data identification circuit identifies the data D from the electric signal converted by the photoelectric converter 15 and outputs it. The data D/clock retrieval circuit separates and retrieves the clock C from the electric signal converted by the photoelectric converter 15, and outputs the clock C.

A part of the reproduced clock C is fed back to the optical phase modulator 11 via the phase shifter 17 and the amplifier 18. The phase shifter 17 serves to apply phase modulation to the optical signal P1 at a desired timing, and adjusts the phase of the clock C. The amplifier 18 serves to adjust the amplitude of the clock C, and is used for applying an appropriate frequency chirp amount by the optical phase modulator 11 using the amplified clock C as the optical modulation signal M.

Note that if the clock C output from the clock/data reproducing circuit 16 has a required phase and amplitude, the phase shifter 17 and the amplifier 18 are not required.

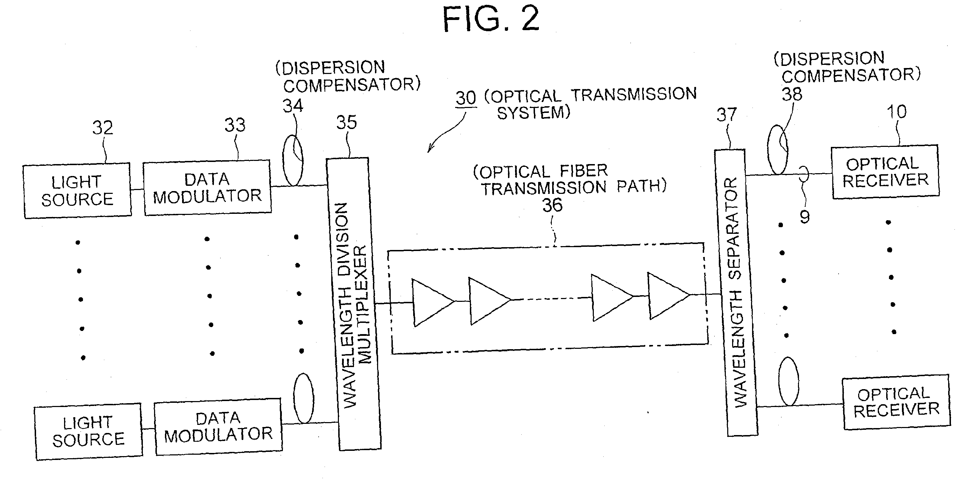

Fig. 2 is a block diagram showing an embodiment in which an optical transmission system is established using the optical receiver shown in Fig. 1. An explanation will be given below based on this Figure. Same parts as that in Fig. 1 are denoted by the same reference numerals so that explanations are omitted.

In an optical transmission system 30 of the present embodiment, the transmission side (optical transmitter) and the receiving side (optical receiver 10) are connected with each other via an optical fiber transmission path 36.

On the transmission side, there are provided plural light sources 32 which emit lights having different wavelengths, plural data modulators 33 which data-modulate lights emitted from the plural light sources 32 respectively and output them as optical signals, and a wavelength division multiplexer 35 which multiplexes plural optical signals with different wavelengths output from the plural data modulators 33 and output the resultant to the optical fiber transmission path 36.

On the receiving side, there are provided a wavelength separator 37 which separates, by each wavelength, the multiplexed optical signal propagating from the transmission side through the optical fiber transmission path 36, and plural optical receivers 10 (see Fig. 1) for obtaining communication information respectively according to each optical signal separated by the wavelength separator 37.

The optical transmission system 30 is a wavelength-division multiplexing transmission system. On the transmission side, lights with different wavelengths emitted from the plural light sources 32 are modulated into such signal forms as NRZ, RZ or CS(carrier suppressed)-RZ by the plural data modulators 33. To each of the modulated optical signals, dispersion amount suitable for compensating the stored dispersion of the optical fiber transmission path 36 is input by a dispersion compensator 34, and then wavelength-division multiplexing is performed to the signals by the wavelength division multiplexer 35.

The optical signal multiplexed by the wavelength division multiplexer 35 propagates through the optical fiber transmission path 36 from the transmission side to the receiving side. As the optical fiber transmission path 36, a non-zero dispersion shifted fiber (NADSF), a transmission path using a core-enlarged fiber, a dispersion-managed transmission path in which an optical fiber with a positive dispersion and an optical fiber with a negative dispersion are combined within one relay block, or the like may be used.

The optical signal output from the transmission side and propagating through the optical fiber transmission path 36 is divided by each channel by the wavelength separator 37 on the receiving side. Then, to the respective divided optical signals, dispersion amounts appropriate for compensating the stored dispersion in the optical fiber transmission path are applied by the plural dispersion compensators 38, and the optical signals are received by the plural optical receivers 10.

As the wavelength separator 37, an array waveguide grating, a fiber grating, a bandpass filter, or the like may be used. As the dispersion compensator 34, 38, one which can apply appropriate dispersion such as a dispersion module using a fiber grating is used other than an optical fiber for dispersion compensation. The dispersion compensator 34, 38 are not necessarily provided for each channel. It may apply dispersion for several channels or all channels at once.

The optical transmission system 30 is a system of high-density wavelength-division multiplexing transmission in which channel spacing is quite narrow, for example, a bit rate per channel is 10Gb/s, and a channel spacing is 33GHz or less. The present invention is applicable to a high-density wavelength-division multiplexing transmission with other bit rate such as a 40Gb/s transmission.

Next, operations of the optical receiver 10 and the optical transmission system 30 will be described with reference to the drawings.

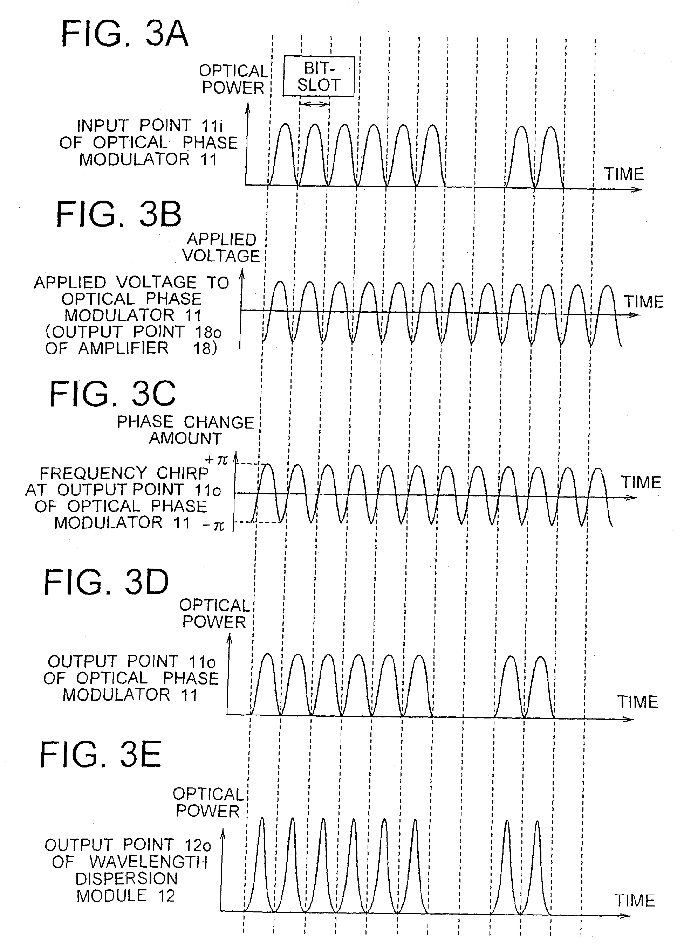

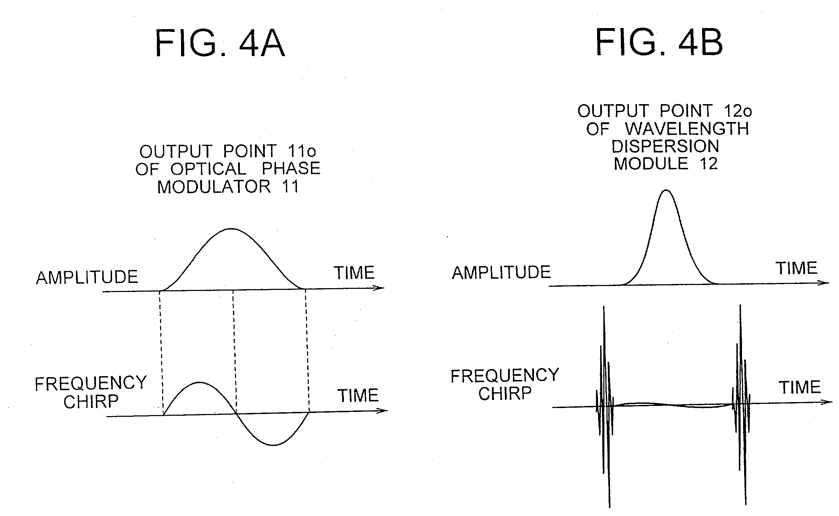

Figs 3, 4A and 4B are waveform charts showing the operation of the optical receiver. An explanation will be given below according to Figs. 1, 3, 4A and 4B.

Fig. 3(a) shows, on the time base, optical power at an input point 11i of the optical phase modulator 11. By applying the phase modulating signal M (voltage applied to clock) shown in Fig. 3(b) to the optical phase modulator 11, a frequency chirp is applied to the optical signal P1 shown in Fig. 3(a). The phase modulating signal M is so adjusted in timing by the phase shifter 17 as to take extreme values at the center of the bit-slot. Although Fig. 3(b) shows an example that the amplitude of the phase modulating signal M takes the maximum value at the center of the bit-slot, the timing may be adjusted so as to take the minimum value instead of the maximum value. However, it depends on the positive or negative of the wavelength dispersion compensated by the wavelength dispersion module 12 that which value, that is, maximum value or minimum value, should be taken.

The phase modulating signal M is obtained by feeding back the clock C output from the clock/data reproducing circuit 16. The amplitude of the phase modulating signal M is adjusted by the optical amplifier 18. This may be adjusted to be an appropriate amount, for example, from 0 to 2Vπ (Vπ: voltage causing the phase difference of the lights to π). With such an application of the phase modulating signal M, the optical signal P2 passing through the optical phase modulator 11 is made to have a frequency chirp shown in Figs. 3(c), 3(d) and 4A. However, the waveform itself of the optical signal P2 is not changed.

The optical signal P2 having the frequency chirp is shaped into the light-wave formed, optical signal P3 having no frequency chirp and compressed around the center as shown in Figs. 3(e) and 4B, by being applied an appropriate wavelength dispersion by the wavelength dispersion module 12. As a result, the optical signal P3 has higher peak power, whereby the error occurrence rate reduces. Note that although the optical signal is assumed to be an RZ signal in Figs. 3, 4A and 48, the similar pulse compression effect can be obtained in the case of NRZ signals or CS-RZ signals, whereby the error occurrence rate also reduces.

Here, the operation of the optical receiver 10 is summarized as follows. The optical signal P1, propagating through the optical fiber transmission path 9, is frequency-chirped by the optical phase modulator 11, and further applied with predetermined wavelength dispersion by the wavelength dispersion module 12, whereby it is pulse-compressed. This optical signal P3 is converted into an electric signal by the photoelectric converter 15. Based on the electric signal, the data D and the clock C are output from the clock/data reproducing circuit 16. Here, a part of the reproduced clock C, which is used as the phase modulating signal M of the optical phase modulator 11, is fed back to the optical phase modulator 11 via the phase shifter 17 and the amplifier 18, whereby a frequency chirp synchronized with the optical signal P1 is applied to the optical signal P1. In this way, even in the case of high-density wavelength-division multiplexing being performed, an optical signal can be pulse-compressed by performing phase modulation and wave dispersion compensation on the receiving side. Thereby, the receiving sensitivity can be improved.

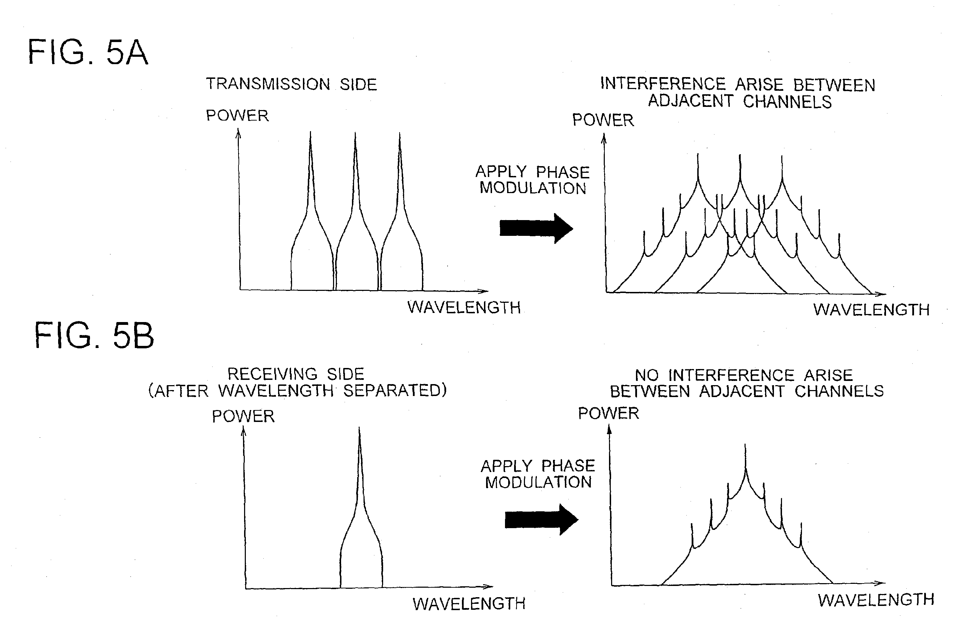

Figs. 5A and 5B are waveform charts showing the operation of the optical transmission system shown in Fig. 2. An explanation will be given below with reference to Figs. 1, 2, 5A and 5B.

In the optical transmission system 30, in a case of high-density wavelength division multiplexing transmission system in which the bit rate is 10Gb/s and the channel spacing is 25GHz, an interference with a signal light of the adjacent channel increases when phase modulation is applied on the transmission side. Thereby, the error occurrence rate after transmission increases significantly. To cope with this, an optical modulation method having a narrow-band optical spectrum such as NRZ or CS-RZ is used, instead of performing phase modulation on the transmission side.

In this way, an optical signal, which is optically modulated on the transmission side, passes through the optical fiber transmission path 36, the wavelength separator 37, and the dispersion compensator 38, and then it is made incident on the optical receiver 10. The optical signal after passing through the dispersion compensator 38 is in the state that it has been separated from an optical signal of the adjacent channel, whereby the deterioration caused by an interference with the optical signal of the adjacent channel is very small even if it is phase-modulated by the optical receiver 10 as shown in Fig. 5B.

Therefore, it is possible to reduce the error occurrence rate of the optical signal even when the optical signal is pulse-compressed using the optical receiver 10 after transmitted from the transmission side.

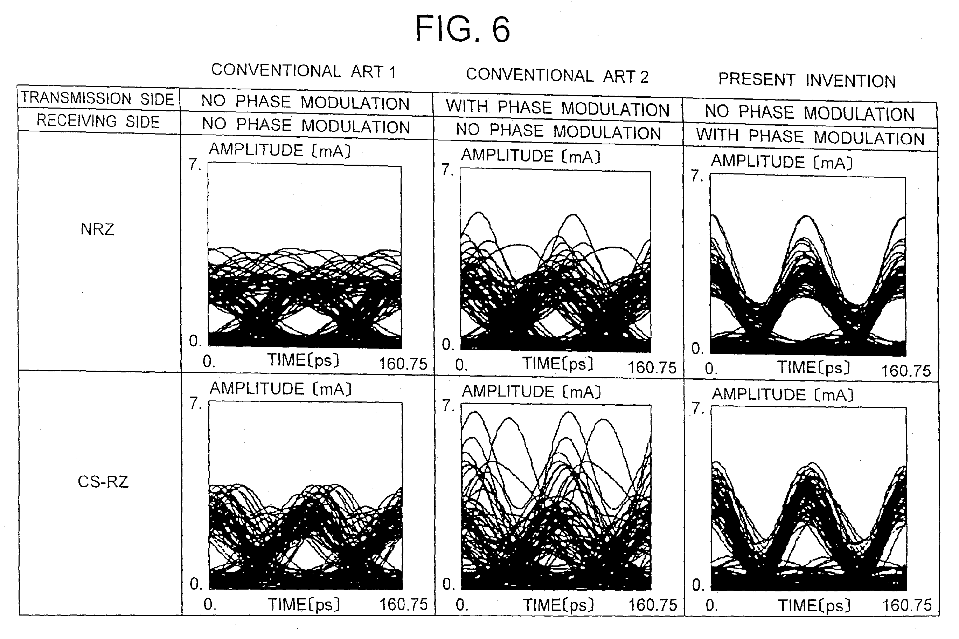

Fig. 6 is a waveform charts showing eye patterns in the optical transmission system shown in Fig. 2. An explanation will be given below with reference to Figs. 1A, 1B, 2 and 6.

In order to confirm the effect of the optical transmission system 30, transmitting simulations have been performed in the optical receiver 10 for a case where a phase modulation intensity applied by the optical phase modulator 11 is Vπ (setting the timing of the phase modulating signal M to compress with negative dispersion), and the dispersion amount applied by the wavelength dispersion module 12 is -100ps/nm. Fig. 6 shows the results of the transmitting simulations performed for an NRZ signal and a CS-RZ signal, respectively, showing eye patters of cases where these signals are transmitted with 10Gb/s, 25GHz spacing wavelength division multiplexing for 6000km, and received on the receiving side. Further, similar transmitting simulations have been performed for conventional art in order to compare with the present invention, in which a case where no phase modulation is performed on either of the transmission side or the receiving side and the other conditions are same is assumed to be conventional art 1, and a case where a phase modulation is performed on the transmission side but is not performed on the receiving side and the other conditions are same is assumed to be conventional art 2.

As obvious in Fig. 6, a pulse (waveform) compression effect can be realized by using the optical receiver 10 in the modulation method of either NRZ or CS-RZ. The eye opening amount in the present invention increases about 1.5 times in the case of NRZ and about 1.3 times in the case of CS-RZ, comparing with the conventional art 1, by using the optical receiver 10. Therefore, the present invention is said to be effective in improving the receiving sensitivity. Particularly, in the case of an NRZ signal, it can be received in the form like an RZ signal by the effect of the pulse compression, whereby the receiving sensitivity is improved significantly, and the error occurrence rate is greatly reduced. Note that in the case of the conventional art 2, the interference with an optical signal of the adjacent channel increases since a phase modulation is applied on the transmission side in the high-density wavelength division multiplexing transmission system, whereby the eye opening amount is reduced significantly.

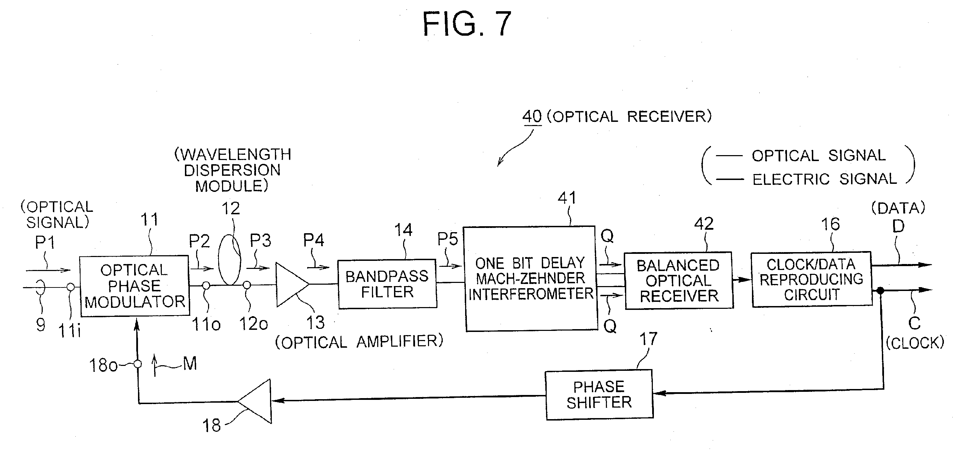

Fig. 7 is a block diagram showing a second embodiment of an optical receiver according to the present invention. An explanation will be given below with reference to this Fig. However, the same parts as Fig. 1 are denoted by the same reference numerals so as to omit the explanations.

An optical receiver 40 of the present embodiment is applied to a wavelength division multiplexing transmission system using a DPSK (differential phase shift keying) method. The present embodiment has such a structure that the photoelectric converter 15 in Fig. 1 is replaced with a one-bit-delay Mach-Zehnder interferometer and a balanced optical receiver 42. The optical signal P1 consisting of a DPSK-NRZ signal or a DPSK-RZ signal propagating through the optical fiber 9 passes through the optical phase modulator 11 and the wavelength dispersion module 12, whereby the waveform is compressed. The operational principle of this compression is same as that of the optical receiver 10 in Fig. 1. The compressed optical signal P3 is made into a data signal Q, which is intensity modulated, and a data signal /Q having the opposite patterns, by the one-bit-delay Mach-Zehnder interferometer. When these data signals Q and /Q are received by the balanced optical receiver 42, receiving characteristics, which are further improved than the receiving characteristics of the conventional DPSK-NRZ signal or DPSK-RZ signal, are obtained, due to the waveform compression effect.

Note that the one-bit-delay Mach-Zehnder interferometer is one so adjusted as to make, for example, a difference in length of two arms equate to a time delay corresponding to one bit. The balanced optical receiver 42 is one in which two photodiodes, receiving data signals Q and /Q, respectively, are serially-connected, and the connecting point serves as an output terminal.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

To improve reception sensitivity by compressing a signal light pulse by performing phase modulation and wavelength-dispersion compensation at the time of high-density wavelength-division multiplexing. There are provided an optical phase modulator and a wavelength-dispersion module, for performing signal processing on an optical signal propagating from the transmission side through an optical fiber transmission path and being received on the receiving side; communication information is thereby obtained. By the optical phase modulator, a frequency chirp corresponding to a phase-modulating signal is applied to the optical signal received on the receiving side. The wavelength-dispersion module applies wavelength dispersion to the optical signal which is frequency-chirped by the phase modulator, the optical signal thereby being pulse-compressed.

## Claims

1. An optical receiver for performing signal processing on an optical signal on the reception side of an optical fiber transmission path through which information is communicated, the receiver comprising:
an optical phase modulator for applying a frequency chirp, corresponding to a phase-modulating signal, to the optical signal; and,
a wavelength-dispersion module for performing wavelength-dispersion processing on the frequency-chirped optical signal to thereby pulse-compress the optical signal.

2. The optical receiver, as claimed in claim 1, wherein the phase-modulating signal is obtained from the optical signal.

3. The optical receiver, as claimed in claim 2, wherein the phase-modulating signal has a frequency that is the same as a digital bit rate of the optical signal.

4. The optical receiver, as claimed in claim 3, wherein the phase-modulating signal is input into the optical phase modulator after being adjusted in phase and amplitude.

5. The optical receiver, as claimed in claim 1, wherein the optical phase modulator applies the frequency chirp in a manner such that a phase delay occurs in a first half of a digital bit-slot of the optical signal, and such that a phase progression occurs in a second half of the bit-slot.

6. The optical receiver, as claimed in claim 1, wherein the optical phase modulator uses, as an input signal, an optical signal which is linearly polarized.

7. The optical receiver, as claimed in claim 1, comprising:
a one-bit-delay Mach-Zehnder interferometer for generating, based on the pulse-compressed optical signal, a data signal Q, which is intensity-modulated, and a data signal /Q having an opposite pattern; and,
a balanced optical receiver for receiving the signals Q and /Q, the signals being waveform-compressed.

8. The optical receiver, as claimed in claim 1, comprising:
an optical amplifier for amplifying the optical signal which is pulse-compressed by the wavelength-dispersion module; and,
a filter for removing a noise component from the optical signal amplified by the optical amplifier.

9. An optical transmission system, comprising:
a transmission unit for multiplexing a plurality of optical signals having different wavelengths without phase-modulation, and for outputting a multiplexed optical signal to an optical-fiber transmission path; and,
a receiving unit connected to the transmission unit via the transmission path, the receiving unit including an optical receiver according to claim 1 for performing signal processing on a received optical signal propagated through the transmission path, and for obtaining communication information from the received optical signal.

10. The optical transmission system, as claimed in claim 9, wherein the transmission unit comprises:
a plurality of light sources for emitting light of different wavelengths;
a plurality of data modulators for data-modulating the light emitted from the respective light sources, and for outputting the data-modulated light as a plurality of optical signals;
a wavelength-division multiplexer for multiplexing the plurality of optical signals, and for outputting a multiplexed optical signal to the transmission path.

11. The optical transmission system, as claimed in claim 9, wherein the receiving unit comprises, upstream of the optical receiver, a wavelength separator for separating into a series of wavelengths the multiplexed optical signal propagated through the transmission path.

12. An optical receiving method comprising the steps of:
applying a frequency chirp, corresponding to a phase-modulating signal, to an optical signal received on a receiving side of an optical-fiber transmission path after propagating through an optical-fiber transmission path from a transmission side; and,
applying wavelength dispersion to the frequency-chirped optical signal to thereby pulse-compress the optical signal.

13. The optical receiving method, as claimed in claim 12, wherein the frequency chirp is obtained from the phase-modulating signal.

14. The optical receiving method, as claimed in claim 12, also comprising the step of using a phase-modulating signal that has a frequency that is the same as a digital bit rate of the optical signal.

15. The optical receiving method, as claimed in claim 12, also comprising the step of adjusting a phase and an amplitude of the phase-modulating signal.

16. The optical receiving method, as claimed in claim 12, also comprising the step of applying the frequency chirp in a manner such that a phase delay occurs in a first half of a digital bit-slot of the optical signal, and such that a phase progression occurs in a second half of the bit-slot.

17. The optical receiving method, as claimed in claim 12, also comprising the step of linearly-polarizing the input signal to the optical phase modulator.

18. The optical receiving method, as claimed in claim 12, comprising the steps of:
using a one-bit-delay Mach-Zehnder interferometer, to generate, based on the pulse-compressed optical signal, a data signal Q, which is intensity-modulated, and a data signal /Q having an opposite pattern; and,
using a balanced optical receiver to receive the signals Q and /Q, the signals being waveform-compressed.
